# EUROPEAN PATENT APPLICATION

(11) **EP 3 715 307 A1**
(43) Date of publication of application: **30.09.2020**
(21) Application number: 19382207.9
(22) Date of filing: 26.03.2019
(51) Int. Cl.: B66B 25/00, B66B 31/00, B64F 1/305

(54) **A LUBRICATION SENSING SYSTEM FOR PASSENGER MOVING SYSTEMS**

(71) Applicant: thyssenkrupp Elevator Innovation Center, S.A., 33203 Gijón - Asturias (ES)
(72) Inventor: Mendiolagoitia Juliana, José, 33203 Gijón (ES); Gonzalez Mieres, Isabel, 33204 Gijón (ES); Alvarez Rodriguez, Adrian, 33211 Gijón (ES)
(74) Representative: thyssenkrupp Intellectual Property GmbH

(57) **Abstract**

The present invention refers to a passenger moving system comprising at least one moving part and at least one lubrication sensing system wherein the lubrication sensing system comprises at least one sensing device adapted to measure lubrication levels of the at least one moving part of the passenger moving system; an analyzing means adapted to receive information from the sensing device and to transform it into processible data in case it is necessary due to the type of information delivered by the sensing device; a processing unit adapted to process the data received from the analyzing means or sensing means and determine if an action is required; a control unit adapted to receive information from the processing unit and to trigger an event, wherein at least one component part of the lubrication sensing system is positioned on at least one moving part of the passenger moving system.

## Description

The invention refers to a passenger moving system comprising at least one moving part and at least one lubrication sensing system wherein the lubrication sensing system comprises as component parts: at least one sensing device; an analyzing means; a processing unit and a control unit, characterized in that at least one component part of the lubrication sensing system is positioned on at least one moving part of the passenger moving system.

Passenger moving systems according to the invention includes escalators, moving walks and passenger boarding bridges. Maintenance of passenger moving systems is extremely important to ensure not just the longevity of the system itself, but also to ensure the safety of the passengers using such systems. Current methods of lubricating passenger moving systems comprising escalators and moving walks involve manual and automatic lubrication. Manual lubrication is performed by technicians during maintenance servicing wherein lubricant is supplied to all chains which contribute to the operation of the moving parts of the system, in particular to the main chain, the step chain or the pallet chain and the handrail chain. The main chain transmits movement from an electric motor to the step chain or to the pallet chain; the step chain or the pallet chain keeps the steps or pallets together in sequence during movement whilst the handrail chain causes the handrail to move via the motor or a secondary motor.

Lack of lubricant in these passenger moving systems can have dangerous consequences for the passengers using them. For example, lack of lubrication on the main chain can cause it to wear which can lead to chain breakage. If the chain breaks, there is no connection between the step chain or the pallet chain with the main chain and thus it becomes impossible to stop the escalator or moving walk respectively and passenger safety becomes compromised. Lack of lubrication of the step chain or the pallet chain can result in elongation of the linkages between adjacent steps or pallets. Thus the distance between the steps or pallets increases which can cause a violation of safety requirements for example EN 115 regulations, as well as causing an increase in noise levels and a decrease in passenger comfort and safety. Lack of lubricant of the handrail chain causes it to wear which can lead to chain breakage. If the handrail chain breaks, the handrail will stop and the passengers no longer have an element which moves at the same speed they are and with which they can hold on to for balance or support. Thus, passenger safety becomes compromised.

Current methods of lubricating passenger moving systems comprising passenger boarding bridges involve usually manual lubrication with the help of the adjustable height function of such bridges. Manual lubrication is performed by technicians during maintenance servicing wherein lubricant is supplied to all chains which contribute to the operation of the moving parts of the system, in particular to a bridgehead drive chain, a bridgehead roller curtain chain and a rotunda roller curtain chain. The bridgehead drive chain is responsible for the control of the positioning of a bridgehead of a passenger boarding bridge with the door of an aircraft. The bridgehead roller curtain chain is responsible of synchronizing the movement of a left roller curtain and a right roller curtain to adapt to the movement of the bridgehead. The rotunda roller curtain chain is responsible of synchronizing the movement of a left roller curtain and a right roller curtain to adapt to the movement of the rotunda. The bridgehead drive chain also needs to be properly maintained and lubricated to maintain correct performance. Failure in the up-keep of this chain can cause chain breakage rendering the chain and thus the positioning of the passenger boarding bridge with respect to the aircraft non-controllable. This increases the risk of collision between the passenger boarding bridge and the aircraft. Lack of lubricant on the roller curtain chains could also cause chain breakage and thus malfunctioning of the roller curtains. However, passenger boarding bridges are not necessarily built to a standard specification; therefore, certain boarding bridges have different physical features, e.g., different height, different cabin dimensions. For example, the passenger boarding bridge used for an A380 aircraft has a minimum height which exceeds a standard height attainable by a technician, either alone, or when using e.g., a ramp. In such cases, a height facilitator is required, for example a platform lift, a forklift, a crane. Manual lubrication of this chain can result in insufficient lubricant being applied, or too much lubricant being applied causing lubricant to drip onto the apron, or onto the ramp or even on to the platform lift or forklift or crane. This can not only compromise passenger safety, but is also hazardous from both an environmental perspective and from a general airport safety perspective.

US 2018/0009639 A1 describes a monitoring system for a passenger conveyor including escalators and moving walkways wherein the monitoring system includes a current sensor for detecting the current supplied to the motor, a temperature sensor for detecting the temperature of the motor, a data collecting device and a controller to determine whether a fault exists in the passenger conveyor. However such a monitoring system does not relate to detecting lubrication levels and thus fails to solve the above problem.

US 2006/0144646 A1 relates to a method and a device for maintenance of an elevator or escalator installation which renders the performance of maintenance operations more organized and efficient. However, the maintenance operations do not include maintenance of the lubrication of such systems and thus it too fails to solve the above problem.

It is thus an object of the present invention to solve the above problem and provide a passenger moving system in which lubrication can be automatically and constantly measured and thus controlled in order to ensure an optimum working performance at all times and thus provide an improvement in passenger safety.

This object is solved by a passenger moving system according to claim 1 and a method according to claim 9.

The inventive passenger moving system is defined by the claims and is described in further detail by the following embodiments and figure description. The invention relates to.
|1| A passenger moving system comprising at least one moving part and at least one lubrication sensing system, preferably an automatic sensing system, wherein the lubrication sensing system comprises as component parts:
- at least one sensing device adapted to measure lubrication levels of at least one moving part of the passenger moving system;
- an analyzing means adapted to receive information from the sensing device and to transform it into processible data in case it is necessary due to the type of information delivered by the sensing device;
- a processing unit adapted to process the data received from the analyzing means or sensing device or any combination thereof and determine if an action is required. The processing unit preferably compares the measured level of lubrication with a threshold level already imputed to the processing unit defined according to the type of passenger moving system;
- a control unit adapted to receive information from the processing unit and to trigger an event;
- a receiver unit, adapted to receive information regarding the triggered event and to communicate it to a technician in case it is required that the technician should have this information,
   characterized in that at least one component part of the lubrication sensing system is positioned on the at least one moving part of the passenger moving system. This advantageously provides a passenger moving system which has a controllable lubrication function.

Preferred examples of a sensing device or sensor include a luminescence sensor; a colour sensor; a capacitance sensor; an infrared sensor; an audio sensor, e.g., a microphone; a measuring sensor, wherein the measuring sensor is preferably adapted to measure the motor current to detect any difference in lubrication. The sensor is preferably installed in such a way that it receives information from any point or a particular point on the moving part. It is preferred that the sensing device transmits preferably continuously, information to the analyzing means or directly to the processing unit. This advantageously provides a reliable sensing system;

The threshold level is defined as the minimum level of lubrication required for correct operation of the passenger moving system, in particular, for correct operation of the chains within the passenger moving system. "Correct operation" refers to operation when the moving parts are sufficiently lubricated and no risk of chain breakage arises. If lubrication falls below this level, the chains can fail and thus the passenger moving system can be rendered inactive and passenger safety compromised. The presence of a threshold level advantageously ensures that the passenger moving system is always sufficiently lubricated.

The processing unit can be in a physical form, or in the form of internet of things i.e., I.o.T., also known as a "cloud". It is envisaged that algorithms which are designed to predict when the lubrication level will fall below the threshold can be used in the processing unit. It is also envisaged that algorithms can be used to monitor the status of the passenger moving system and adjust the lubrication threshold value accordingly. It is also envisaged that algorithms can be designed to reflect the nature of the chain of the passenger moving system, e.g., how old the chain is, the number of running hours, the number of chain rotations, the number of lubrications, the amount of lubrication used, the stopping time, the surrounding ambient temperature and the temperature of the chain itself.

The triggered event is preferably at least one of the following:
- no action;
- sending information to a technician;
- initiating a maintenance process, i.e., lubricating the chain;
- providing an input to the processing unit e.g., adjusting the lubrication threshold value according to an adjusted working environment;
- triggering a defined action in the passenger moving system, wherein the defined action can comprise any one of the following: an indication of any type including of the visible type or readable type, reduction of speed, stopping the unit, or any combination thereof.

This advantageously provides a passenger moving system which has a controllable lubrication function.
|2| The passenger moving system according to embodiment 111, characterized in that the at least one moving part of the passenger moving system comprises at least one movable chain, and wherein the at least one component part of the lubrication sensing system is the at least one sensing device. Preferably the movable chain is one of
   a. a main chain - which preferably transmits the movement from the electric motor to the step chain or pallet chain;
   bi. a step chain or
   bii. a pallet chain - wherein the step chain or the pallet chain preferably keep the steps or pallets together and in sequence while in movement;
   c. a handrail chain - which preferably causes the handrail to move via the motor or a secondary motor;
   d. any combination of a to c, preferably when the passenger moving system is a moving walk or an escalator:
   e. a movable chain adapted to control the positioning of a bridgehead of the passenger boarding bridge with respect to an aircraft door
   f. a chain adapted to synchronize roller curtains of both sides of the bridgehead;
   g. a chain adapted to synchronize roller curtains of both sides of a rotunda;
   h. any combination of e to g, preferably when the passenger moving system is a passenger boarding bridge.
   This advantageously provides a passenger moving system in which lubrication levels can be measured at one or more various locations.
|3| The passenger moving system according to any of the preceding embodiments characterized in that the processing unit is in a physical form e.g., a piece of hardware, or in the form of internet of things i.e., I.o.T. e.g., a cloud. A processing unit in the form of a cloud advantageously provides a lubrication sensing system with less physical component parts and thus is more "space friendly" and easier to install in a passenger moving system.
|4| The passenger moving system according to any of the preceding embodiments characterized in that each movable chain comprises at least one component part of the lubrication sensing system.
|5| The passenger moving system according to any of the preceding embodiments, characterized in that the at least one component part of the lubrication sensing system is a sensing device. This advantageously provides a passenger moving system in which the lubrication of all movable chains can be constantly and simultaneously measured.
|6| The passenger moving system according to any of the preceding embodiments, wherein several sensing devices, preferably sensors, are preferably connected to the same analyzing means, processing unit, control unit, as well as receiver unit, thereby advantageously providing a central "hub" for monitoring the lubrication levels of all sensing devices located within the passenger moving system.
|7| The passenger moving system according to any of the preceding embodiments, characterized in that it comprises an escalator, a moving walk, a passenger boarding bridge.
|8| The passenger moving system according to any of the preceding embodiments characterized in that it is an escalator or a moving walk, wherein at least one part of the lubrication sensing system is positioned on at least one movable chain; preferably on at least two movable chains, preferably on all movable chains. A passenger moving system being an escalator preferably comprises a sensor located on its main chain, step chain or handrail chain, or any combination thereof. A passenger moving system being a moving walk preferably comprises a sensor located on its main chain, pallet chain, or handrail chain, or any combination thereof. This advantageously provides a passenger moving system in which the lubrication of all movable chains can be constantly and simultaneously measured thus ensuring passenger safety and travelling comfort.
|9| The passenger moving system according to any of the preceding embodiments characterized in that it is a passenger boarding bridge wherein at least one part of the lubrication sensing system is positioned on a movable chain adapted to control the positioning of a bridgehead of the passenger boarding bridge with respect to an aircraft door or on a chain which is adapted to synchronize a roller curtain on the left side and a roller curtain on the right side of the bridgehead, or on a chain adapted to synchronize a roller curtain on the left side and a roller curtain on the right side of the rotunda or any combination thereof. This advantageously provides a passenger boarding bridge in which the lubrication of the movable chain or movable chains can be constantly measured, thus ensuring passenger and worker safety proper boarding bridge operation, as well as improved environmental standards.

The invention also relates to:
|10| A method of monitoring the lubrication level within a passenger moving system comprising the steps of:
   a) providing a lubrication sensing system comprising as component parts:
      - a sensing device adapted to measure lubrication levels within at least one moving part of the passenger moving system. Preferably it is adapted to measure lubrication levels of the movable chains of the passenger moving system, wherein the chains can be the main chain of an escalator or moving walk, the step chain or pallet chain of an escalator or moving walk respectively, or the handrail chain of an escalator or moving walk, or the chain comprised within a passenger boarding bridge which controls the movement of the passenger boarding bridge and its alignment with the door of an aircraft, or the chain or chains located under a bridgehead and/or a rotunda which synchronize a roller curtain on either side or on both sides of the respective bridgehead and the rotunda;
      - an analyzing means adapted to receive information from the sensing device and to transform it into processible data in case it is necessary due to the type of information delivered by the sensing device;
      - a processing unit adapted to process the data received from the analyzing means or sensing device or any combination thereof and determine if an action is required;
      - a control unit adapted to receive information from the processing unit and to trigger an event;
      - a receiver unit, adapted to receive information regarding the triggered event and to communicate it to a technician in case it is defined that the technician should have this information;
   b) installing the lubrication sensing system in the passenger moving system;
      wherein at least one component part of the lubrication sensing system is installed on at least one moving part of the passenger moving system.
   The triggered event is preferably at least one of the following:
   - no action;
   - sending information to a technician;
   - initiating a maintenance process, i.e., lubricating the chain;
   - triggering a defined action in the passenger moving system, wherein the defined action can comprise any one of the following: an indication of any type including of the visible type or readable type, reduction of speed, stopping the unit, or any combination thereof;
   - providing an input to the processing unit e.g., adjusting the lubrication threshold value according to an adjusted working environment.
   This advantageously provides a method to control the lubrication within a passenger moving system.
|11| The method according to embodiment |10| characterized in that the at least one component part of the lubrication sensing system installed on the at least one moving part of the passenger moving system is the sensing device.
|12| The method according to any of embodiments |10| to |11| characterized in that the lubrication sensing system performs the following processing steps:
   a. collecting data relating to at least one moving part of the passenger moving system, preferably relating to the movable chains off the passenger moving system;
   b. setting a lubrication threshold L_{T} based on the collected data, wherein the threshold level L_{T} is defined as the minimum level of lubrication required for correct operation of the passenger moving system
   c. communicating the lubrication threshold L_{T} to the processing unit;
   d. measuring the lubrication level of the at least one moving part via the sensing device;
   e. analyzing the information relating to the measured lubrication level via the analyzing means;
   f. performing data comparison of the measured lubrication level with the lubrication threshold L_{T} via the processing unit;
   g. communicating the results of the comparison data to a control unit, which subsequently triggers an event.
   The triggered event is preferably at least one of the following:
   - no action;
   - sending information to a technician;
   - initiating a maintenance process, i.e., lubricating the chain;
   - triggering a defined action in the passenger moving system, wherein the defined action can comprise any one of the following: an indication of any type including of the visible type or readable type, reduction of speed, stopping the unit, or any combination thereof;
   - providing an input to the processing unit e.g., adjusting the lubrication threshold value according to an adjusted working environment. The event can be communicated to a technician via a display panel comprised in the passenger moving system, or via a display panel on a remote receiver unit which is wirelessly connected to at least the control unit of the lubrication sensing system. The receiver unit can be a handheld device which is comprised on the person of the technician, or can be integrated with a computer.
   This advantageously provides a method to control the lubrication within a passenger moving system according to working conditions.
|13| The method according to any of embodiments |10| to |12| characterized in that the lubrication threshold L_{T} for a first moving part can be different to the lubrication threshold L_{T} for at least one further moving part. This advantageously provides for lubrication levels on different chains to be measured simultaneously and for each respective chain to be lubricated according to its specific requirement. For example a main chain in an escalator may have a first threshold value L_{T} whilst a handrail chain in the same escalator may have a lower second threshold value L_{T} and therefore requires lubrication more often. The lubrication sensing system according to the invention advantageously provides that the lubrication of each chain can be individually measured such that lubrication of the correct chain takes place when required.
|14| The method according to any of embodiments |10| to |13|, characterized in that the at least one moving part comprises at least one movable chain.
|15| The method according to any of embodiments |10| to |14|, characterized in that the movable chain is one of
   a. a main chain - which preferably transmits the movement from the electric motor to the step chain or pallet chain;
   bi. a step chain or
   bii. a pallet chain - wherein the step chain or the pallet chain preferably keep the steps or pallets together and in sequence while in movement;
   c. a handrail chain - which preferably causes the handrail to move via the motor or a secondary motor;
   d. any combination of a to c, in particular when the passenger moving system is an escalator or a moving walk:
   e. a chain adapted to control the positioning of a bridgehead of the passenger boarding bridge with respect to an aircraft door;
   f. a chain adapted to synchronize roller curtains of both sides of the bridgehead;
   g. a chain adapted to synchronize roller curtains of both sides of a rotunda;
   h. any combination of e to g, in particular when the passenger moving system is a passenger boarding bridge.
   This advantageously provides a passenger moving system in which lubrication levels can be measured at one or more various locations.
|16| The method according to any of embodiments |10| to |15|, characterized in that the passenger moving system is an escalator or a moving walk.
|17| The method according to any of embodiments |10| to |15| characterized in that the passenger moving system is a passenger boarding bridge.

The invention is described in more detail with the help of the figures, wherein it is shown schematically
Fig. 1 a step diagram of the process steps carried out by the lubricating sensing system according to the invention;
Fig.2 a step diagram showing the chain of command in a lubricating sensing system according to the invention when installed in an escalator or moving walk;
Fig. 3 a step diagram showing the chain of command in a lubricating sensing system according to the invention when installed in a passenger boarding bridge;
Fig. 4 a step diagram showing the chain of command in a lubricating sensing system according to the invention when installed in a passenger boarding bridge.

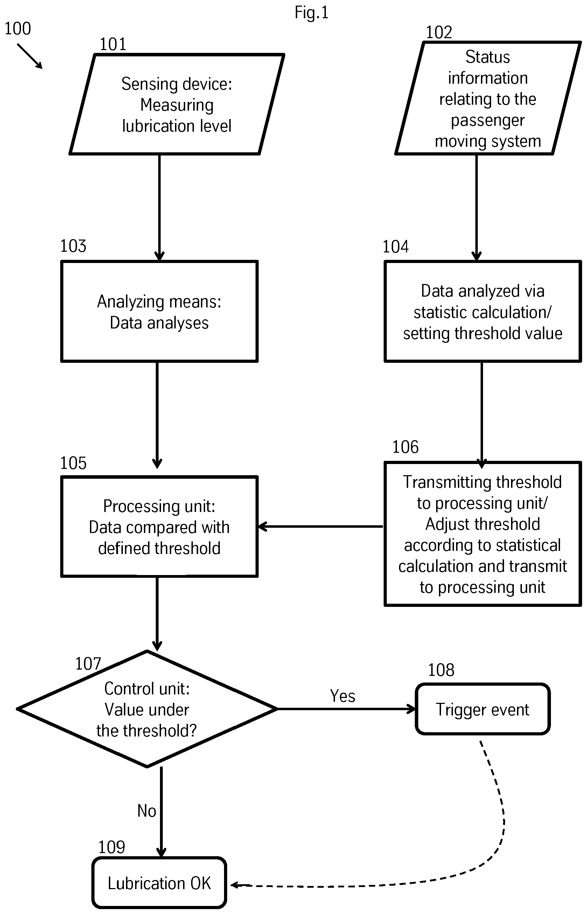

Fig. 1 shows a step diagram of the lubrication sensing system 100 according to the invention and its process steps when installed in a passenger moving system, wherein a sensing device being a sensor is positioned on a first movable chain.

In step 102, background information is gathered relating to the passenger moving system and its component parts, for example, the age of the movable chain, the number of running hours, the number of chain rotations, the surrounding ambient temperature and the temperature of the chain itself. In this particular embodiment, the passenger moving system is an escalator or moving walk and the first movable chain is the main chain. The background data is analyzed in step 104 via an analyzing means and transmitted to a processing unit, which then sets a reference lubrication level L_{ref}. The processing unit in this particular embodiment is located in the cloud. The reference lubrication level L_{ref} is taken after a minimum running period has elapsed after installation of the lubrication sensing system in the escalator or moving walk or it is obtained from similar systems in which information is shared from the cloud or introduced manually to the processing unit. A threshold lubrication level L_{T} is set wherein said level L_{T} can be adjusted accordingly in step 106. Such adjustment can be made for example to better reflect the operation conditions of the escalator or moving walk. Any change for example in the number of chain rotations, the surrounding ambient temperature or the temperature of the chain itself, can be taken into consideration when determining the threshold value L_{T}.

Once the threshold L_{T} is set and the escalator or moving walk is in operation, the sensor constantly and automatically measures the lubrication level of the main chain in step 101 and transmits the measurement data to the analyzing means for subsequent analysis in step 103. The analyzing means transforms the data into processible data in case it is necessary due to the type of information delivered by the sensing device and transmits it to the processing unit in the cloud, where comparison of the measured lubrication value L_{M} with the threshold value L_{T} is carried out in step 105. The control unit receives the comparison information from the processing unit in step 107 which subsequently triggers an event 108. When L_{M} is greater than L_{T}, there is sufficient lubrication and the event 108 can be one of
- taking no action 109; or
- sending information to a technician or a data gathering center informing that no lubrication is required.

When L_{M} is less than L_{T}, there is insufficient lubrication and the event 108 can be one of;
- sending information to a technician informing them the lubrication level is insufficient; or
- initiating a maintenance process, i.e., lubricating the chain;
- or triggering a defined action in the passenger moving system, wherein the defined action can comprise any one of the following: an indication of any type including of the visible type or readable type, reduction of speed, stopping the unit, or any combination thereof.
If L_{M} is significantly greater than L_{T}, the event can be to provide an input to the processing unit in order to adjust the threshold level. Similarly if L_{M} is significantly lower than L_{T}, a first event can be to e.g., initiate lubrication and a second event can be to provide an input to the processing unit in order to adjust the threshold level.

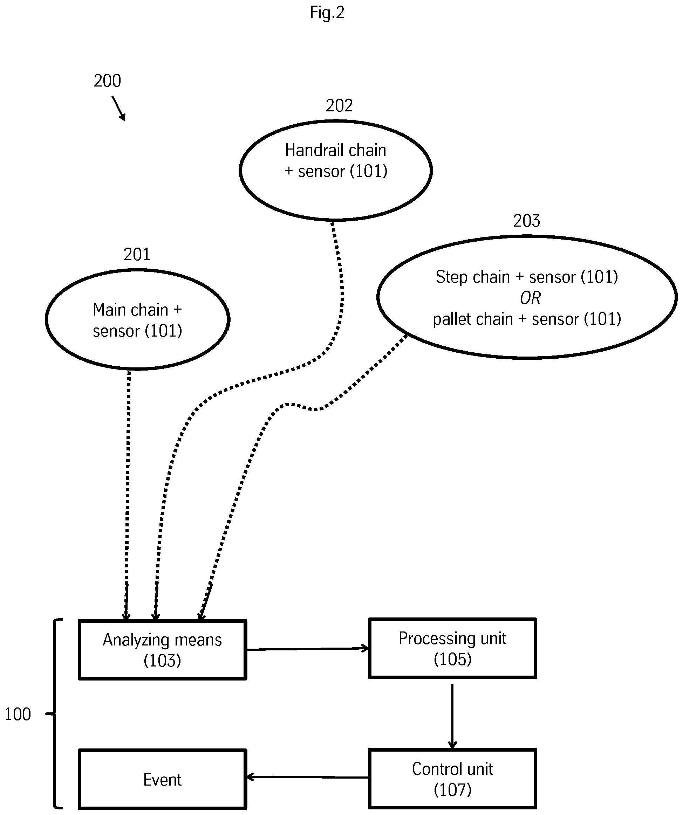

The event can be communicated to a technician via a display panel comprised in the passenger moving system, or via a display panel on a remote receiver unit which is wirelessly connected to at least the control unit of the lubrication sensing system. The receiver unit can be a handheld device which is comprised on the person of the technician, or can be integrated with a computer. The same process 100 as shown in Fig. 1 is performed for each movable chain within a passenger moving system which comprises a lubrication sensing system according to the invention, in particular, which comprises a sensing device of the lubrication sensing system. Fig. 2 shows an embodiment wherein a passenger moving system being an escalator or moving walk comprises a lubrication sensing system according to the invention. The main chain 201, the handrail chain 202 and the step chain of an escalator 203 or pallet chain of a moving walk 203 each comprise a sensing device being a sensor. Process step 101 is carried out at each sensor. Each sensing device is connected to the same
- analyzing means where process step 103 is performed; which itself is connected to a
- processing unit where process step 105 is performed and which is connected to a
- control unit where process step 107 is performed. A receiver unit is preferably wirelessly connected to the same control unit also. Thereby providing a lubrication sensing system which comprises a central "hub" for monitoring the lubrication levels of all sensing devices located within the passenger moving system and which can communicate these levels to a technician via a receiver unit or via a display panel comprised in the escalator itself.

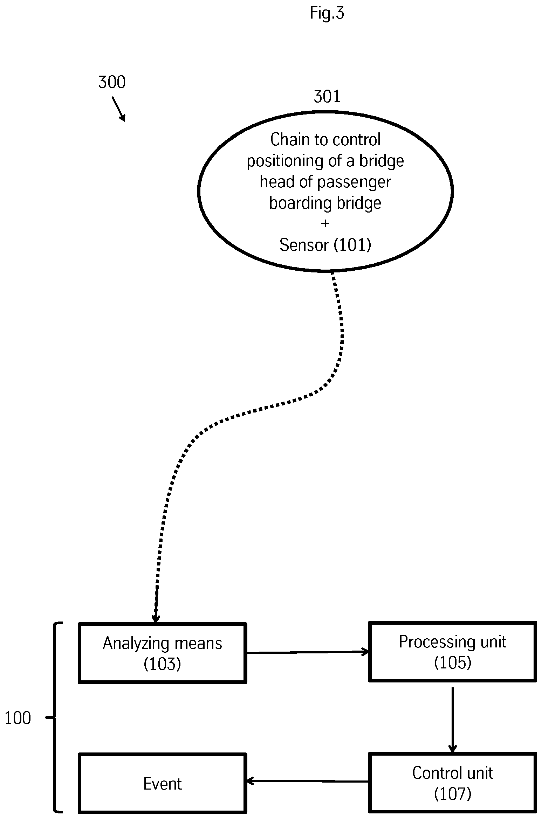

Fig. 3 shows an embodiment wherein a passenger moving system being a passenger boarding bridge comprises a lubrication sensing system according to the invention. The same process 100 as shown in Fig. 1 is performed for the chain 301 which is adapted to control the positioning of a bridgehead of the passenger boarding bridge with respect to an aircraft door. This chain comprises a sensor wherein process step 101 occurs. The sensor is connected to an
- analyzing means where process step 103 is performed; which itself is connected to a
- processing unit where process step 105 is performed and which is connected to a
- control unit where process step 107 is performed. A receiver unit is preferably wirelessly connected to the same control unit also. Thereby providing a lubrication sensing system which comprises a central "hub" for monitoring the lubrication levels of all sensing devices located within the passenger moving system and which can communicate these levels to a technician via a receiver unit or via a display panel comprised in the escalator itself.

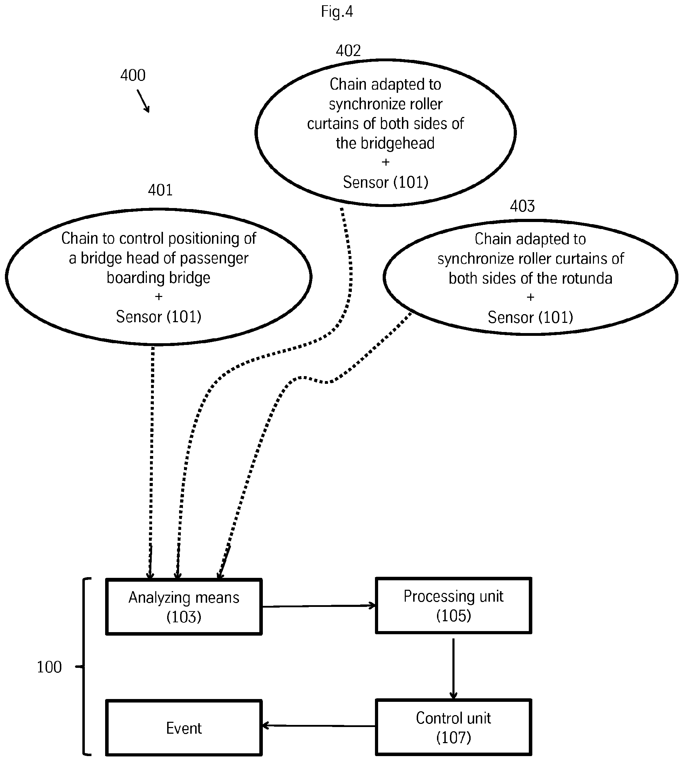

The same process 100 as shown in Fig. 3 is performed for each movable chain within a passenger moving system which comprises a lubrication sensing system according to the invention, in particular, which comprises a sensing device of the lubrication sensing system. Fig. 4 shows an embodiment wherein a passenger moving system being a passenger boarding bridge comprises a lubrication sensing system according to the invention. The chain to control positioning of a bridge head 401, the chain adapted to synchronize roller curtains of both sides of the bridgehead 402 and the chain adapted to synchronize roller curtains of both sides of the rotunda 403 each comprise a sensing device being a sensor. Process step 101 is carried out at each sensor. Each sensing device is connected to the same
- analyzing means where process step 103 is performed; which itself is connected to a
- processing unit where process step 105 is performed and which is connected to a
- control unit where process step 107 is performed. A receiver unit is preferably wirelessly connected to the same control unit also. Thereby providing a lubrication sensing system which comprises a central "hub" for monitoring the lubrication levels of all sensing devices located within the passenger moving system and which can communicate these levels to a technician via a receiver unit or via a display panel comprised in the escalator itself.

The foregoing description is intended to be illustrative rather than restrictive. The assembly of the present disclosure described hereinabove is defined by the claims, and all changes that fall within the meaning and range of equivalency of the claims are to be embraced within their scope.

### Reference signs list

- 100: lubrication sensing system step diagram
- 101: lubrication level measurement
- 102: background information check
- 103: analysis of measured data
- 104: analysis of background data
- 105: data comparison
- 106: adjustment of threshold value L_{T}
- 107: control unit instructions
- 108: event
- 109: event

- 200: escalator or moving walk comprising a lubrication sensing device
- 201: main chain and sensor
- 202: handrail chain and sensor
- 203: step chain and sensor
- 203: pallet chain and sensor

- 300: passenger boarding bridge comprising a lubrication sensing device
- 301: chain to control positioning of a bridgehead of passenger boarding bridge and sensor

- 400: passenger boarding bridge comprising a lubrication sensing device
- 401: chain to control positioning of a bridgehead of passenger boarding bridge and sensor
- 402: chain adapted to synchronize roller curtains of both sides of bridgehead and sensor
- 403: chain adapted to synchronize roller curtains of both sides of rotunda and sensor

- L_{T}: threshold value
- L_{M}: measured lubrication

## Claims

1. A passenger moving system comprising at least one moving part and at least one lubrication sensing system(100) wherein the lubrication sensing system comprises as component parts:
- at least one sensing device (101) adapted to measure lubrication levels of the at least one moving part of the passenger moving system;
- an analyzing means (103) adapted to receive information from the sensing device (101) and to transform it into processible data;
- a processing unit (105) adapted to process the data received from the analyzing means (103) or sensing device (101) and determine if an action is required;
- a control unit (107) adapted to receive information from the processing unit (105) and to trigger an event
**characterized in**
**that** at least one component part of the lubrication sensing system (100) is positioned on the at least one moving part of the passenger moving system.

2. The passenger moving system according to claim 1,
**characterized in, that** the at least one moving part of the passenger moving system comprises at least one movable chain, and wherein the at least one component part of the lubrication sensing system (100) is the at least one sensing device (101).

3. The passenger moving system according to any of the preceding claims
**characterized in that** the processing unit (105) is in a physical form, or in the form of internet of things.

4. The passenger moving system according to any of claims 2 to 3
**characterized in that** each movable chain comprises at least one component part of the lubrication sensing system (100).

5. The passenger moving system according to any of the preceding claims,
**characterized in, that** it comprises an escalator, a moving walk, a passenger boarding bridge.

6. The passenger moving system according to any of the preceding claims
**characterized in that** it is an escalator or a moving walk, wherein at least one part of the lubrication sensing system (100) is positioned on at least one of the following movable chains:
a. a main chain
bi. a step chain or
bii. a pallet chain;
c. a handrail chain;
d. any combination of a to c.

7. The passenger moving system according to any of the preceding claims **characterized in that** it is a passenger boarding bridge wherein at least one part of the lubrication sensing system (100) is positioned on at least one of the following movable chains:
e. a movable chain adapted to control the positioning of a bridgehead of the passenger boarding bridge with respect to an aircraft door;
f. a chain adapted to synchronize roller curtains of both sides of the bridgehead;
g. a chain adapted to synchronize roller curtains of both sides of a rotunda;
h. any combination of e to g.

8. The passenger moving system according to claim 6 or claim 7 **characterized in that** the at least one part of the lubricating sensing system (100) is the sensing device (101).

9. A method of monitoring the lubrication level within a passenger moving system comprising at least one moving part according to any of the preceding claims comprising the steps of:
a) providing a lubrication sensing system (100) comprising as component parts:
- a sensing device (101) adapted to measure the lubrication level of at least one moving part of the passenger moving system;
- an analyzing means (103) adapted to receive information from the sensing device (101) and to transform it into processible data;
- a processing unit (105) adapted to process the data received from the analyzing means (103) or sensing device (101) and determine if an action is required;
- a control unit (107) adapted to receive information from the processing unit (105) and to trigger an event.
b) installing the lubrication sensing system (100) in the passenger moving system;
wherein at least one component part of the lubrication sensing system (100) is installed on at least one moving part of the passenger moving system.

10. The method according to claim 9 **characterized in that** the at least one component part of the lubrication sensing system (100) installed on the at least one moving part of the passenger moving system is the sensing device (101).

11. The method according to any of claims 9 to10 **characterized in that** the lubrication sensing system (100) is adapted to perform the following process steps:
a. collecting data relating to at least one moving part of the passenger moving system (102);
b. setting a lubrication threshold L_{T} (104) based on the collected data (102), wherein the threshold level L_{T} is defined as the minimum level of lubrication required for correct operation of the passenger moving system;
c. communicating the lubrication threshold L_{T} to the processing unit (106);
d. measuring the lubrication level of the at least one moving part via the sensing device (101);
e. analyzing the information relating to the measured lubrication level via the analyzing means (103);
f. performing data comparison of the measured lubrication level with the lubrication threshold L_{T} via the processing unit (105);
g. communicating the results of the comparison data to a control unit (107), which subsequently triggers an event (108, 109).

12. The method according to any of claims 9 to 11 **characterized in that** the lubrication threshold L_{T} for a first moving part can be different to the lubrication threshold L_{T} for at least one further moving part.

13. The method according to any of claims 9 to 12, **characterized in that** the at least one moving part comprises at least one movable chain.

14. The method according to any of claims 9 to 13 **characterized in that** the passenger moving system is an escalator or a moving walk.

15. The method according to any of claims 9 to 13 **characterized in that** the passenger moving system is a passenger boarding bridge.
